# EUROPEAN PATENT SPECIFICATION

(11) **EP 3 532 407 B1**
(45) Date of publication and mention of the grant of the patent: **25.11.2020**
(21) Application number: 17758954.6
(22) Date of filing: 31.07.2017
(51) Int. Cl.: B65D 85/804

(54) **BEVERAGE PREPARATION CAPSULE**
GETRÄNKEZUBEREITUNGSKAPSEL
CAPSULE POUR LA PRÉPARATION DE BOISSONS

(30) Priority: 31.10.2016 IT 201600109774
(43) Date of publication of application: 04.09.2019
(73) Proprietor: Gruppo Gimoka S.R.L., 20090 Trezzano Sul Naviglio (IT)
(72) Inventor: FARAVELLI, Massimo, 23014 Andalo Valtellino (IT)
(74) Representative: Giannini, Manuela
(86) International application number: PCT/IB2017/054672
(87) International publication number: WO 2018/078461

(56) References cited:
- WO-A1-2014/126463
- WO-A1-2015/049270
- WO-A2-2015/177591
- US-A1- 2010 260 895
- US-A1- 2012 121 780

## Description

### Technical Field of the Invention

The present invention relates to a beverage preparation capsule.

In particular, the present invention relates to a capsule which is suitable to be used in an automatic beverage preparation device comprising a cup-shaped body defined by a lateral wall and a bottom wall provided with a beverage outflow opening, and closed by a cover perforable to allow a fluid to be injected in the capsule; the capsule further comprises a filter assembly extending transversally to a longitudinal axis of the capsule to divide the internal volume of the capsule into an upper chamber intended to contain a beverage preparation substance, and a lower chamber intended to collect the beverage.

### State of the Art

Capsules for use in automatic beverage preparation devices are known, for example, from:
EP 2 998242, which discloses a capsule comprising an outer body having a longitudinal axis; a filter disk arranged in the outer body transversely to the longitudinal axis to define an upper chamber intended to contain a product to be infused, and a lower chamber intended to collect the beverage; and a membrane arranged below the filter disk and
defining, with the latter, an intermediate chamber intended to contain an aromatic substance;
WO 2014/037339, which discloses a capsule accommodating a filter disk provided with perforating members and intended to define, in the capsule, an upper chamber intended to contain a product to be infused, and a lower chamber intended to collect the beverage; the capsule further comprises an aluminium membrane arranged in the upper chamber to tear against the filter disk due to the increase in the pressure in the upper chamber, and a plastic membrane arranged in the upper chamber, above the aluminium membrane, and provided with pre-cuts with anti-drip function;
WO 2015/049270, which discloses a capsule provided internally with a riser conduit extending upwards from a bottom wall and communicating with an outlet conduit. In use, the brewed beverage flows from the bottom of the capsule towards the cover and outflows through the outlet conduit;
US 2010/260895, which discloses a capsule having an outer cup body closed by a wall through which the beverage may outflow. The wall comprises at least a first layer and a second layer each provided with at least one orifice through which the beverage may flow.

Other capsules are known from US 2012/121780 A1, US 2010/260895 A1, WO 2015/177591 A1, WO 2014/126463 A1.

### Object and Summary of the Invention

The object of the present invention is to provide an improved capsule of the type specified above and which allows the beverage delivery process and the beverage aesthetic and organoleptic properties to be improved, and, at the same time, is cost-effective and simple to manufacture.

According to the present invention, a beverage preparation capsule is provided, as claimed in the appended claims.

### Brief Description of the Drawings

The invention will now be described with reference to the accompanying drawings, which show a non-limiting embodiment, wherein:
Figure 1 shows, in cross-section, a capsule according to a preferred embodiment of the invention;
Figure 2 is an exploded view of a detail of the capsule of figure 1;
Figure 3 shows a plan view of the detail of figure 2;
Figures 4 to 7 show, in exploded view, respective variations of the detail of figure 2; and
Figure 8 shows a plan view of the detail of figure 7.

### Detailed Description of Preferred Embodiments of the Invention

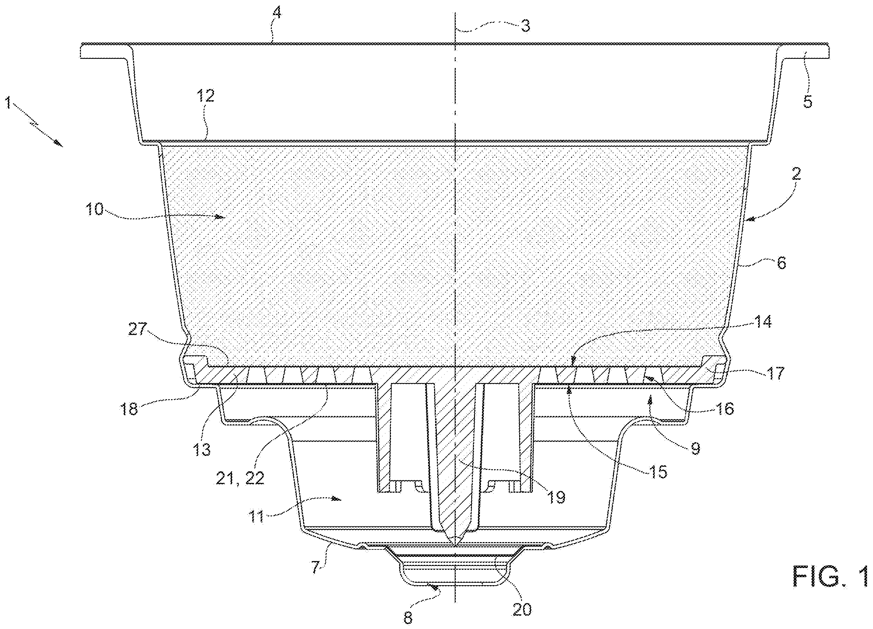

In figure 1, the number 1 designates, in its entirety, a capsule intended to contain an infusion substance or a soluble substance for the preparation of a beverage such as, for example, coffee, tea, chocolate, milk, broth, etc.

The capsule 1 is suitable for use in devices of known type (not shown), in which the beverage preparation process comprises arranging the capsule in a sealed seat and supplying a pressurised hot or cold fluid, usually water, in the capsule, in such a way as to percolate or dissolve the substance contained in the capsule and thus obtain the beverage.

As shown in Figure 1, the capsule 1 comprises a cup-shaped body 2, which has a longitudinal axis 3 and is closed at its upper end by a cover 4 consisting of a single-layer or multi-layer film made of plastic and/or metallic material and hermetically welded to an outer annular flange 5 of the cup-shaped body 2 to be perforated, in use, by a perforating device (not shown) of the automatic beverage preparation device to allow a fluid, typically water, to be injected in the capsule 1 at a defined temperature and pressure.

The cup-shaped body 2 comprises a side wall 6, which is coaxial with the axis 3 and is preferably, but not necessarily, generally flared towards the annular flange 5, and a bottom wall 7, which extends in a direction generally transverse to the axis 3 and has a beverage outflow opening 8.

The cup-shaped body 2 is made of an impermeable material, preferably plastic for food use, in particular polypropylene (PP) or polybutylene terephthalate (PBT), and can be obtained through any moulding suitable process, in particular by thermoforming.

As shown in Figure 1, the capsule 1 further comprises a filter assembly 9, which extends in the capsule 1 in a direction generally transverse to the axis 3, in such a way as to divide the internal volume of the capsule 1 into an upper chamber 10, which is intended to contain an infusion substance or a soluble substance, and a lower or collection chamber 11, into which the beverage from the upper chamber 10 flows and then outflows from the capsule 1 through the beverage outflow opening 8.

Depending on the type and quantity of the substance contained in the capsule 1 and/or the degree of compaction that the substance should have, the substance in the chamber lower 10 may occupy all or only part of the volume between the filter assembly 9 and the cover 4.

In particular, if, as in the case of the capsule shown in Figure 1, the substance is an infusion substance, for example coffee, the volume of the lower chamber 10 occupied by the substance is delimited at the bottom by the filter assembly 9 and at the top by a micro-perforated foil 12 welded to the side wall 6 at a distance from the cover 4. The micro-perforated foil 12 has the further function of favouring a uniform distribution and penetration of the infusion fluid into the substance when the infusion fluid is fed into the capsule 1 through the cover 4.

The filter assembly 9 comprises a relatively rigid disk 13, which is firmly secured to the side wall 6, is delimited at the top by a face 14 facing the upper chamber 10 and at the bottom by a face 15 facing the lower chamber 11, and is provided with a number of through openings 16 extending between the faces 14 and 15.

The disk 13 can be firmly secured to the side wall 6 by pressure-fitting, gluing, or in any other suitable technology.

According to the preferred embodiment shown in Figure 1, the disk 13 has a peripheral portion 17, which rests on a flat annular portion 18 of the side wall 6 which is transverse to the axis 3 and is delimited peripherally by an edge arranged in contact with the side wall 6.

To keep the disk 13 firmly in contact with the flat annular portion 18 of the side wall 6 and prevent it, in use, from lifting and moving towards the inside of the chamber 10, the side wall 6 is provided with a retaining member which engages at the top with the peripheral portion 17 of the disk 13 and is defined by an annular protuberance 21 projecting towards the inside of the capsule 1.

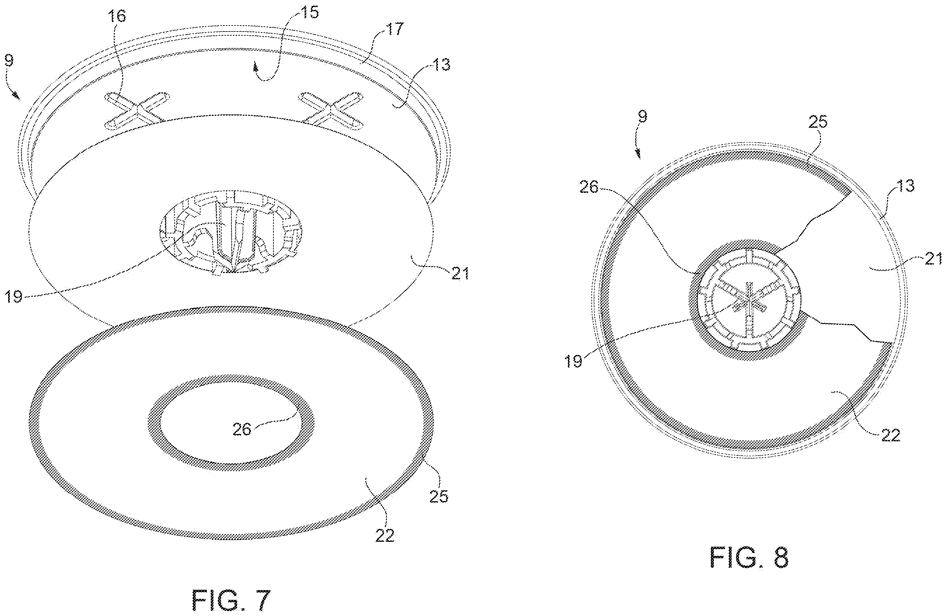

Depending on the type of beverage that the capsule 1 is destined to produce, the openings 16 of the disk 13 can have different shapes and sizes. Purely by way of example, in the capsule shown in Figure 1, the openings 16 are defined by a plurality of holes uniformly distributed over a central annular portion of the disk 13. According to a variant shown in Figure 7, the openings 16 are defined by a number of cross pre-cuts distributed around the axis 3.

The disk 13 of the filter assembly 9 comprises a central tip 19, which protrudes from the face 15 of the disk 13 coaxially to the axis 3 and has the function, in use, of perforating a sealing film 20 welded onto the internal side of the bottom wall 7, in front of the beverage outflow opening 8 in such a way as to allow the beverage to outflow from the capsule 1.

For this purpose, the tip 19 has a height, measured parallel to the axis 3, lower than the distance between the face 15 and the sealing film 20, and the side wall 6 has a deformable annular portion 21 arranged between the disk 13 and the beverage outflow opening 8 and designed to collapse axially when, in use, the capsule 1 is compressed inside the above-mentioned seat of the automatic beverage preparation device, with consequent axial displacement of the tip 19 towards and through the sealing film 20.

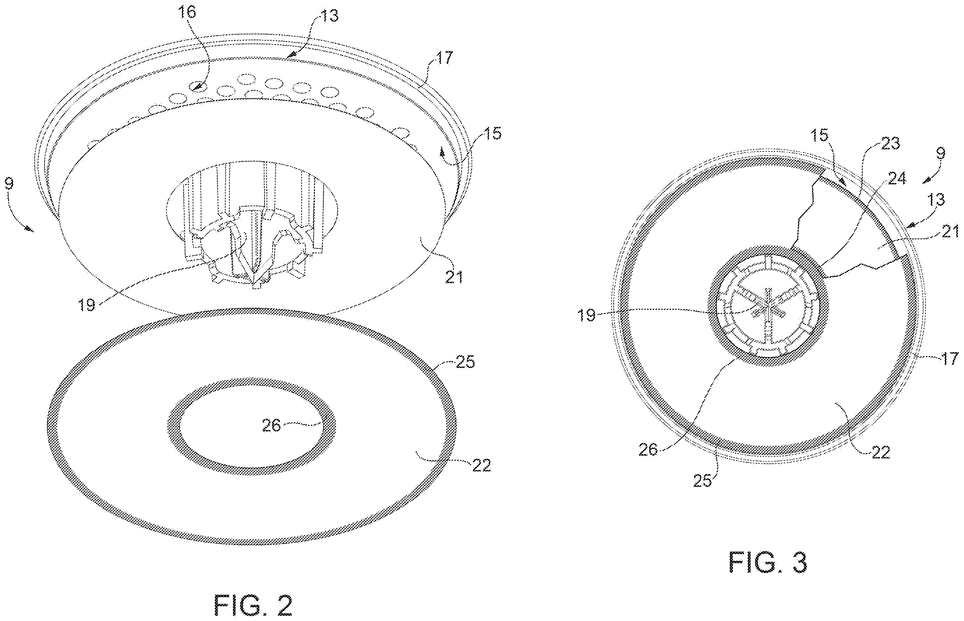

As shown in Figures 2 to 8, the filter assembly 9 comprises, in addition to the disk 13, two barrier members arranged downstream of the disk 13, in the beverage outflow direction, and defined by two membranes 21 and 22, which face one another and are in direct contact with each other and are coupled to the disk 13 according to various methods that will be described below.

The membrane 21 is arranged between the disk 13 and the membrane 22 and has the function of sealing the upper chamber 10 containing the infusion substance, and of tearing, in use, as a consequence of the introduction of the infusion fluid, when the pressure inside the upper chamber 10 reaches a defined threshold value.

The membrane 21 is preferably formed by a film of aluminium of variable thickness depending on the beverage to be produced, but can be made from a film of any other material, for example a polymeric or multi-layered material, provided that this material has technical properties such as to allow tearing of the membrane 21 when the aforementioned threshold value of the pressure inside the upper chamber 10 is reached.

In particular, the membrane 21 has an annular shape and extends around the tip 19 coaxially to the axis 3 in such a way as to close the openings 16. According to variants not shown, the shape and the size of the membrane 21 may vary from those of the example shown in the attached Figures. In general, the extension of the membrane 21 may cover all or only part of the face 15 of the disk 13, provided that it is sufficient to cover the area of the disk 13 having the openings 16.

The membrane 21 is preferably coupled to the disk 13 by heat sealing, however other permanent coupling systems, such as, for example, gluing, may be used for this purpose. The membrane 21 may be welded in different ways, such as, for example, over the entire face 15 of the disk 13 (not shown), or continuously along an outer peripheral area 23 and an inner peripheral area 24 of the membrane 21, as shown in Figures 3 to 6.

The membrane 22 defines the last layer of the filter assembly 9, has an annular shape, and extends around the tip 19 coaxially to the axis 3 so as to entirely cover the outer face of the membrane 21.

The membrane 22 may consist of a film made of aluminium or a polymeric material or a multi-layer aluminium/polymeric material, depending on the type of beverage the capsule 1 is intended to produce. Also in this case, the thickness of the membrane may vary depending on the beverage to be produced.

The membrane 22 is coupled to the rest of the filter assembly 9 preferably by heat sealing, although it is possible to use any other known suitable technology, and the coupling can be made according to three main methods:
a) the membrane 22 is directly coupled to the disk 13;
b) the membrane 22 is coupled to the membrane 21;
c) the membrane 22 is partly directly coupled to the disk 13 and partly coupled to the membrane 21.

Figures 2 to 6 show some possible coupling embodiments under a) in the above list.

In particular, in Figures 2 and 3, the membrane 22 is coupled to the face 15 of the disk 13 by means of a continuous welding along an outer peripheral area 25 and an inner peripheral area 26 of the membrane 22. In order for the membrane 22 to be coupled onto the disk 13, the shape and size of the membrane 21 is such as to expose areas of the disk 13 where the membrane 22 may be coupled. In the case shown, therefore, the membrane 21 has an outer diameter smaller than the outer diameter of the membrane 22, and an inner diameter greater than the inner diameter of the membrane 22, whereby the outer peripheral areas 23 and 25 and the inner peripheral areas 24 and 26 fail to overlap.

In this embodiment, the membrane 21 is welded to the disk 13 by means of a continuous welding along the outer and inner peripheral areas 23 and 24.

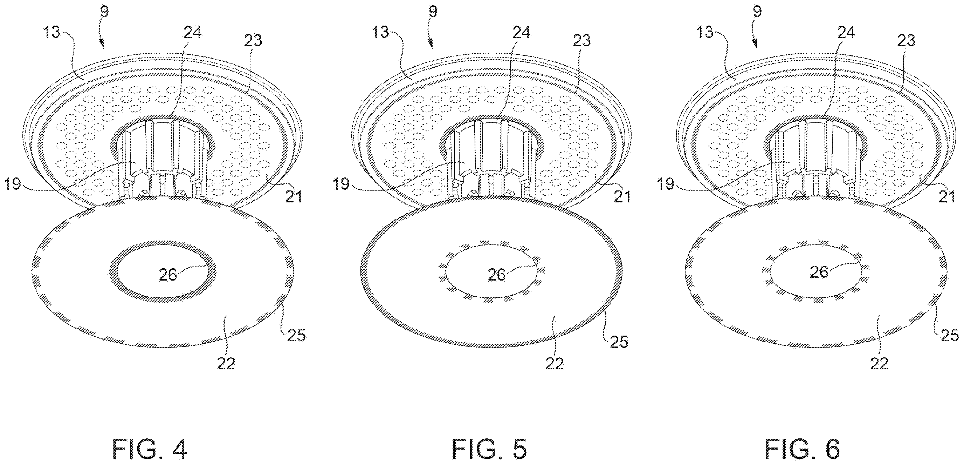

In Figure 4, the membrane 22 is directly coupled to the face 15 of the disk 13 by means of a continuous welding along the inner peripheral area 26 and a discontinuous welding along the outer peripheral area 25. Also in this case, the membrane 21 is directly coupled to the disk 13 by means of a continuous welding along the outer and inner peripheral areas 23 and 24.

In Figure 5, the membrane 22 is directly coupled to the face 15 of the disk 13 by means of a continuous welding along the outer peripheral area 25 and a discontinuous welding along the inner peripheral area 26. Also in this case, the membrane 21 is directly coupled to the disk 13 by means of a continuous welding along the outer and inner peripheral areas 23 and 24.

In Figure 6, the membrane 22 is directly coupled to the face 15 of the disk 13 by means of a discontinuous welding along both the outer and inner peripheral areas 25 and 26. Also in this case, the membrane 21 is directly coupled to the disk 13 by means of a continuous welding along the outer and inner peripheral areas 23 and 24.

In the cases described above in which the wielding is discontinuous, the morphology and the size of the welded and unwelded areas may be varied and are chosen as a function of the properties of the beverage to be produced.

Figures 7 and 8 show a possible coupling embodiment under b) in the above list.

In this case, the membranes 21 and 22 have substantially the same size and are simultaneously coupled to the disk 13 through a common continuous welding along the outer and inner perimeters of the membrane 22.

According to a variant which is applicable to all of the embodiments described above with reference to Figures 2, 4, 5, 6 and 7, of the membrane 21 may be welded onto the disk 13, rather than only along the inner and outer perimeters of the membrane 21, over the whole face 15 of the disk 13 or along the inner and outer perimeters of the membrane 21, over sectors of any geometry of the disk 13.

In addition to the above, it is important to emphasise that the filter assembly 9 may also be used in capsules which have a different structure from the capsule 1 taken as an example in the present description, in particular in capsules lacking the tip 19. In this case, the filter assembly 9 differs from the one previously described in that the membranes 21 and 22 do not necessarily have an annular shape, but may have a disk shape or a shape of any other type provided that the membrane 21 is suitable to cover the openings 16 of the disk 13, and thus sealing the chamber 10 and that the two membranes are opposite to one another.

If the membranes 21 and 22 are not annular, welding along the inner perimeter is obviously no longer necessary and can be omitted completely or may be replaced by a welding area at the central portion of the disk 13.

In general, the filter assembly 9 according to the present invention may be used in capsules that fail to have a capsule opening system by deformation of the side wall and puncturing of a lower film seal by means of internal perforating means. Specifically, the filter assembly 9 may also be used in capsules lacking the sealing film or in capsules wherein the sealing film is manually removed before use of the capsule or is perforated by means of external perforators mounted on the beverage preparation device.

Finally, depending on the properties of the beverage to be produced, in particular when the capsule 1 is intended to produce a beverage by infusion, the filter assembly 9 of the capsule 1 also comprises a further filter member, which consists of a sheet 27 of a water permeable material, for example a sheet of filter paper or nonwoven fabric, is arranged on the face 14 of the disk 13 in direct contact with the substance in the upper chamber 10, and has the function of allowing the beverage to flow therethrough and, at the same time, preventing residues of the infused substance from escaping from the upper chamber 10.

Operation of the capsule 1 is hereinafter briefly described with particular regard to the action of the filter assembly 9. The closure of the capsule 1 in the aforementioned seat of the beverage preparation device causes perforation of the cover 4 and tearing of the sealing film 20 by the tip 19. As a result of the injection of the fluid under pressure, the beverage obtained by infusion or solution of the substance contained in the upper chamber 10 flows through the disk 13 and reaches the membrane 21.

When the pressure of the beverage is equal to a threshold value which is dependent on the material, the thickness and the type of welding of the membrane 21, the latter is torn allowing the beverage to reach the membrane 22. The behaviour of the beverage downstream of the membrane 21 depends on a variety of factors including mainly the configuration of the welding of the membrane 22.

If the welding of the membrane 22 is continuous, the beverage is subject to a pressure increase up to the breaking of the membrane 22, with consequent tearing of the membrane 22 and outflow of the beverage.

If the welding of the membrane 22 is discontinuous and comprises alternating welded and unwelded sectors, after having flown through the membrane 21, the beverage is channelled into the passages defined by unwelded sectors to then flow into the chamber 11 for collection and from here out of the capsule 1.

As regards the effects due to the action of the filter assembly 9, the Applicant has observed that, with respect to conventional filters, the filter assembly 9 makes it possible to significantly improve the beverage delivery process in terms of:
- quality improvement in the aesthetic beverage delivery since the beverage flows out of the capsule more smoothly and without splashing; this result is particularly appreciable when the membrane 22 is discontinuously welded since the presence of an alternation of welded and unwelded sectors results in a plurality of flow sections which make it possible to distribute the beverage flow in a more homogeneous and controlled manner;
- quality improvement in the aesthetic appearance of the beverage in the cup; in particular, in the case of coffee, the filter assembly 9 makes it possible to obtain a more compact and persistent crema;
- quality improvement in the organoleptic property of the beverage.

## Claims

1. A capsule (1) to prepare a beverage in an automatic beverage preparation device, the capsule (1) comprises a cup-shaped body (2) defined by a lateral wall (6) and a bottom wall (7) having a beverage outflow opening (8), and closed by a cover (4) perforable to allow a fluid to be injected in the capsule (1); the capsule further comprises a filter assembly (9) extending transversally to a longitudinal axis (3) of the capsule (1) to divide an internal volume of the capsule (1) into an upper chamber (19) intended to contain a beverage preparation substance, and a lower chamber (11) intended to collect the beverage; wherein the filter assembly comprises a relatively rigid filter disk (13) provided with through openings (16); wherein the filter assembly further comprises a first membrane (21) coupled to the filter disk (13) in front of said openings (16) so as to seal the upper chamber (10) and to tear when, in use, the pressure inside the upper chamber (10) reaches a defined threshold value as a consequence of the introduction of an infusion fluid; said capsule being
**characterised in that** the filter assembly further comprises a second membrane (22), said first (21) and second (22) membranes being stacked in a stack; wherein the first membrane (21) is arranged between the filter disk (13) and the second membrane (22); said stack being on, and direct coupled to, a face of the filter disk (13) facing the lower chamber (11)

2. The capsule according to claim 1, wherein the first membrane (21) is coupled to the filter disk (13) along a continuous perimeter of the first membrane (21).

3. The capsule according to claim 1, wherein the first membrane (21) is wholly coupled to the filter disk (13).

4. The capsule according to any one of the preceding claims, wherein the second membrane (22) is coupled to either the filter disk (13) or the first membrane (21) along a perimeter of the second membrane (22), either continuously or discontinuously.

5. The capsule according to claim 1 or 2, wherein the first and second membranes (21, 22) have an annual shape, and wherein the first membrane (21) is coupled to the filter disk (13) either wholly or along both internal and an external perimeters of the first membrane (21), and the second membrane (22) is coupled to either the filter disk (13) or the first membrane (21) along both internal and external perimeters of the second membrane (22), along each of which either continuously or discontinuously.

6. The capsule according any one of the preceding claims, wherein each membrane (21; 22) is directly coupled to the filter disk (13).

7. The capsule according to any one of the preceding claims, wherein the first and second membranes (21, 22) are welded to the filter disk (13).

## Patentansprüche

1. Eine Kapsel (1) zum Zubereiten eines Getränks in einer automatischen Getränkezubereitungsvorrichtung, wobei die Kapsel (1) einen becherförmigen Körper (2) umfasst, der durch eine Seitenwand (6) und eine Bodenwand (7) mit einer Getränkeausflussöffnung (8) definiert ist und durch einen Deckel (4) verschlossen ist, der perforierbar ist, um das Einspritzen einer Flüssigkeit in die Kapsel (1) zu ermöglichen; die Kapsel umfasst ferner eine Filteranordnung (9), die sich quer zu einer Längsachse (3) der Kapsel (1) erstreckt, um ein Innenvolumen der Kapsel (1) zu unterteilen in eine obere Kammer (19), die dazu bestimmt ist, eine Getränkezubereitungssubstanz zu enthalten, und eine untere Kammer (11), die dazu bestimmt ist, das Getränk zu sammeln; wobei die Filteranordnung eine relativ starre Filterscheibe (13) umfasst, die mit Durchgangsöffnungen (16) versehen ist; wobei die Filteranordnung ferner eine erste Membran (21) umfasst, die vor den genannten Öffnungen (16) mit der Filterscheibe (13) so gekoppelt ist, dass sie die obere Kammer (10) abdichtet und dann reißt, wenn im Gebrauch der Druck innerhalb der oberen Kammer (10) als Folge der Einführung eines Aufgussfluids einen definierten Schwellenwert erreicht; wobei die genannte Kapsel
**dadurch gekennzeichnet ist, dass** die Filteranordnung ferner eine zweite Membran (22) umfasst, wobei die genannte erste (21) und die genannte zweite (22) Membran in einem Stapel gestapelt sind; wobei die erste Membran (21) zwischen der Filterscheibe (13) und der zweiten Membran (22) angeordnet ist; wobei sich der genannte Stapel auf einer Fläche der Filterscheibe (13) befindet, die der unteren Kammer (11) zugewandt ist, und direkt mit dieser verbunden ist.

2. Die Kapsel nach Anspruch 1, wobei die erste Membran (21) mit der Filterscheibe (13) entlang eines kontinuierlichen Umfangs der ersten Membran (21) gekoppelt ist.

3. Die Kapsel nach Anspruch 1, wobei die erste Membran (21) vollständig mit der Filterscheibe (13) gekoppelt ist.

4. Die Kapsel nach irgendeinem der vorstehenden Ansprüche, wobei die zweite Membran (22) entweder mit der Filterscheibe (13) oder der ersten Membran (21) entlang eines Umfangs der zweiten Membran (22) entweder kontinuierlich oder diskontinuierlich gekoppelt ist.

5. Die Kapsel nach Anspruch 1 oder 2, wobei die erste und die zweite Membran (21, 22) eine Ringform haben und wobei die erste Membran (21) mit der Filterscheibe (13) entweder ganz oder entlang sowohl eines inneren als auch eines äußeren Umfangs der ersten Membran (21) gekoppelt ist und die zweite Membran (22) entweder mit der Filterscheibe (13) oder der ersten Membran (21) entlang sowohl eines inneren als auch eines äußeren Umfangs der zweiten Membran (22) gekoppelt ist, und zwar entlang jeder davon entweder auf kontinuierliche oder diskontinuierliche Weise.

6. Die Kapsel nach irgendeinem der vorstehenden Ansprüche, wobei jede Membran (21; 22) direkt mit der Filterscheibe (13) gekoppelt ist.

7. Die Kapsel nach irgendeinem der vorstehenden Ansprüche, wobei die erste und die zweite Membran (21, 22) mit der Filterscheibe (13) verschweißt sind.

## Revendications

1. Capsule (1) pour préparer une boisson dans un dispositif de préparation de boisson automatique, la capsule (1) comprend un corps en forme de coupelle (2) défini par une paroi latérale (6) et une paroi inférieure (7) ayant une ouverture de sortie de boisson (8), et fermé par un couvercle (4) pouvant être perforé pour permettre d'injecter un fluide dans la capsule (1) ; la capsule comprend en outre un ensemble de filtre (9) s'étendant de manière transversale jusqu'à un axe longitudinal (3) de la capsule (1) afin de diviser un volume interne de la capsule (1) en une chambre supérieure (19) prévue pour contenir une substance de préparation de boisson, et en une chambre inférieure (11) prévue pour collecter la boisson ; dans laquelle l'ensemble de filtre comprend un disque de filtre relativement rigide (13) prévu avec des ouvertures débouchantes (16) ; dans laquelle l'ensemble de filtre comprend en outre une première membrane (21) couplée au disque de filtre (13) en face desdites ouvertures (16) afin de sceller la chambre supérieure (10) et pour se déchirer lorsque, à l'usage, la pression à l'intérieur de la chambre supérieure (10) atteint une valeur de seuil définie en conséquence de l'introduction d'un fluide d'infusion ; ladite capsule étant **caractérisée en ce que** l'ensemble de filtre comprend en outre une seconde membrane (22), lesdites première (21) et seconde (22) membranes étant empilées dans une pile ; dans laquelle la première membrane (21) est agencée entre le disque de filtre (13) et la seconde membrane (22) ; ladite pile étant sur, et directement couplée à une face du disque de filtre (13) faisant face à la chambre inférieure (11) .

2. Capsule selon la revendication 1, dans laquelle la première membrane (21) est couplée au disque de filtre (13) le long d'un périmètre continu de la première membrane (21).

3. Capsule selon la revendication 1, dans laquelle la première membrane (21) est complètement couplée au disque de filtre (13).

4. Capsule selon l'une quelconque des revendications précédentes, dans laquelle la seconde membrane (22) est couplée au disque de filtre (13) ou à la première membrane (21) le long d'un périmètre de la seconde membrane (22), de manière continue ou de manière discontinue.

5. Capsule selon la revendication 1 ou 2, dans laquelle les première et seconde membranes (21, 22) ont une forme annulaire, et dans laquelle la première membrane (21) est couplée au disque de filtre (13) complètement ou le long des périmètres à la fois interne et externe de la première membrane (21), et la seconde membrane (22) est couplée au disque de filtre (13) ou à la première membrane (21) le long des périmètres à la fois interne et externe de la seconde membrane (22), le long de chacun de manière continue ou discontinue.

6. Capsule selon l'une quelconque des revendications précédentes, dans laquelle chaque membrane (21 ; 22) est directement couplée au disque de filtre (13).

7. Capsule selon l'une quelconque des revendications précédentes, dans laquelle les première et seconde membranes (21, 22) sont soudées au disque de filtre (13).
